# EUROPÄISCHE PATENTSCHRIFT

(11) **EP 1 763 408 B1**
(45) Veröffentlichungstag und Bekanntmachung des Hinweises auf die Patenterteilung: **16.01.2008**
(21) Anmeldenummer: 05738236.8
(22) Anmeldetag: 04.05.2005
(51) Int. Cl.: B07C 5/342, B07C 5/36, B07C 5/34, G01N 21/89, G01V 8/20

(54) **DETEKTIERVORRICHTUNG ZUM ERKENNEN VON GEGENSTÄNDEN IN EINEM MATERIALSTROM**
DETECTION DEVICE FOR IDENTIFYING OBJECTS IN A MATERIAL STREAM
DISPOSITIF DE DETECTION POUR IDENTIFIER DES OBJETS DANS UN FLUX DE MATIERE

(30) Priorität: 29.06.2004 AT 45004 U
(43) Veröffentlichungstag der Anmeldung: 21.03.2007
(73) Patentinhaber: Binder + Co. AG, 8200 Gleisdorf (AT)
(72) Erfinder: HUBER, Reinhold, A-8280 Fürstenfeld (AT); PANSINGER, Christian, A-8052 Graz (AT)
(74) Vertreter: Henhapel, Bernhard
(86) Internationale Anmeldenummer: PCT/AT2005/000154
(87) Internationale Veröffentlichungsnummer: WO 2006/000001

(56) Entgegenhaltungen:
- EP-A- 0 375 881
- EP-A- 0 452 235
- EP-A- 0 479 756
- WO-A-96/03226
- DE-A1- 19 509 631
- GB-A- 1 274 449
- US-A- 4 606 634
- US-A- 4 699 273
- US-A1- 2003 035 108

## Beschreibung

### GEBIET DER ERFINDUNG

Die vorliegende Erfindung bezieht sich auf eine Detektiervorrichtung zum Erkennen von Gegenständen in einem Materialstrom, vorzugsweise aus Bruchglas, wobei mindestens eine aus mehreren Lichtquellen bestehende optische Sendereinheit und mindestens eine, dieser zugeordneten, ein Linsensystem umfassende Empfängereinheit vorgesehen sind, sowie eine dazwischen angeordnete, vom Materialstrom durchwanderte Detektierstrecke gemäß dem Oberbegriff des Anspruchs 1 sowie auf eine Sortiervorrichtung gemäß Oberbegriff des Anspruchs 10, in welcher eine solche Detektiervorrichtung zum Einsatz kommt.

### STAND DER TECHNIK

Detektiervorrichtungen, welche mittels optischer Sender- und Empfängereinheiten Fremdkörper in einem zwischen den Sender-und Empfängereinheiten vorbeigeführten Materialstrom, insbesondere einem Bruchglasstrom, detektieren, sind beispielsweise aus der AT 395.545 B bekannt. Die Sendereinheiten bestehen aus Lichtstrahlen aussendenden Lichtquellen, vorzugsweise Diodenlichtquellen, welche in der Empfängereinheit über ein Linsensystem auf eine Photozelle gebündelt werden. Bei bekannten Detektiervorrichtungen sind die Lichtquellen parallel zueinander ausgerichtet, wodurch auch die emittierten Lichtstrahlen parallel zueinander in Richtung Empfängereinheit verlaufen. Problematisch dabei ist die Tatsache, dass die parallel verlaufenden Lichtstrahlen unterschiedliche Abstände zur optischen Achse des Linsensystems des Empfängers aufweisen. Es ist jedoch eine seit langem bekannte Tatsache, dass optische Abbildungen durch eine Linse grundsätzlich nicht fehlerfrei sind und mit dem Abstand der einzelnen Lichtstrahlen zur optischen Achse der Abbildungsfehler zunimmt.

Die erwähnten Detektiervorrichtungen kommen in ebenfalls bekannten Sortiervorrichtungen zum Einsatz. Der zu sortierende Materialstrom, beispielsweise Bruchglas, wird zwischen den Sender- und Empfangseinheiten vorbeigeleitet und die Lichtstrahlen entsprechend unterbrochen bzw. durchgelassen. Die Sender- und Empfangseinheiten sind dabei mit einer Steuereinheit verbunden, die in weiterer Folge stromabwärts der Sender- und Empfängereinheiten angeordnete Ausblasdüsen ansteuert. Bei Unterbrechung eines Lichtstrahls einer Sendereinheit bzw. Abschwächung desselben unter einen bestimmten Schwellwert, nimmt die Steuereinheit an, dass diese Unterbrechung bzw. Abschwächung durch einen Fremdkörper (also kein Glas) ausgelöst wurde und aktiviert, mit einer Verzögerung, die sich nach dem Abstand der Ausblasdüsen zu den Lichtquellen richtet, die in den Materialstrom gerichteten, jener Sender- und Empfängereinheit zugeordneten Ausblasdüsen, für welche die Unterbrechung des Lichtstrahls bzw. dessen Abschwächung registriert wurde, wodurch der vermutete Fremdkörper aus dem Materialstrom heraus, vorzugsweise in einen Abfallbehälter befördert wird.

Der oben erwähnte Nachteil bei den bislang eingesetzten Detektiervorrichtungen führt jedoch zu einem ungenauen Ausblasvorgang und der Tatsache, dass vermutete Fremdkörper nicht exakt detektiert werden und im Materialstrom verbleiben. Insbesondere bei vermuteten Fremdkörpern, die weiter von der optischen Achse einer Empfängereinheit weg im Materialstrom vorbeifießen, ist die Abbildungsschärfe gering und führt zu Fehlbeurteilungen hinsichtlich des Materials.

US-A-4 699273 (Abb. 1-4) stellt den nächstliegenden Stand der Technik dar und offenbart eine Detektiervorrichtung zum Erkennen und zur Sortierung von Gegenständen 11 mittels einer optischen Sendereinheit bestehend aus mehreren Lichtquellen 23-24 bzw. 33-34, einer Empfängereinheit bestehend aus einem Linsensystem 25 und einem Photodetektor 30. Durch die Lichtquellen 23-24 bzw. 33-34 werden Reflektion- bzw. Transmissionsmessungen durchgeführt, wobei in Transmission die Lichtquellen 33-34 parallel zueinander und in Reflektion die Lichtquellen auf die zu messenden Gegenstände ausgerichtet sind.

### DARSTELLUNG DER ERFINDUNG

Es ist daher die Aufgabe der vorliegenden Erfindung, diesen Nachteil zu verhindern und eine Detektiervorrichtung vorzuschlagen, welche die den optischen Linsensystemen anhaftende Fehlerquelle weitgehend eliminiert.

Erfindungsgemäß wird diese Aufgabe durch die kennzeichnenden Merkmale des Anspruchs 1 gelöst.

Dadurch ist sichergestellt, dass die Lichtstrahlen im Bereich des Schnittpunktes der optischen Achse des Linsensystems mit dem Linsensystem auftreffen und somit eine optimale Ablenkung der Lichtstrahlen auf die Photozelle ermöglicht wird. Mit Schnittpunkt ist in diesem Fall nicht zwingenderweise ein Punkt als solcher gemeint sondern ein Bereich um den Schnittpunkt, der eine Umleitung der Lichtstrahlen auf die dahinter angeordnete Photozelle mit ausreichender Sicherheit und Genauigkeit ermöglicht. In der Praxis wird dieser Bereich durch einen Kreis um den Schnittpunkt mit einem Durchmesser von ca. 2 mm gebildet sein. Durch das Ausschalten der optischen Unschärfe kann eine wesentlich verbesserte Ausblasleistung der Ausblasdüsen der Sortiereinrichtung erreicht werden.

Gemäß kennzeichnendem Merkmal des Anspruchs 2, die eine bevorzugte Ausführungsform der Erfindung beschreibt, sind die Lichtquellen einer Sendereinheit in einer Ebene ausgerichtet, in welcher auch die optische Achse des Linsensystems der zugeordneten Empfängereinheit liegt. In diesem Fall müssen die Lichtquellen in dieser Ebene lediglich um einen Winkel gegenüber der optischen Achse geneigt werden, um das Auftreffen der Lichtstrahlen am Schnittpunkt der optischen Achse mit dem Linsensystem zu ermöglichen.

Gemäß den kennzeichnenden Merkmalen des Anspruchs 3 verläuft diese Ebene senkrecht zur Detektierstrecke, die als durchsichtige Materialrutsche ausgebildet ist. Dies bedeutet, dass Sendereinheit und Empfängereinheit mit Linsensystem einander genau gegenüber liegen.

Die kennzeichnenden Merkmale des Anspruchs 4 beschreiben eine weitere bevorzugte Ausführungsform der Erfindung, bei welcher die Lichtquellen einer Sendereinheit in mindestens zwei parallel zueinander verlaufenden Ebenen ausgerichtet sind, vorzugsweise, gemäß kennzeichnendem Merkmal des Anspruchs 5 sind diese Ebenen parallel zur optischen Achse verlaufend. In der Regel wird die optische Achse zwischen den beiden erwähnten Ebenen verlaufen. Dabei ist der Normalabstand zwischen den Ebenen und der optischen Achse entweder so gering, dass lediglich die weiter oben beschriebene Neigung der Ausrichtung der Lichtquellen in der jeweiligen Ebene um einen Winkel auf die Projektion der optischen Achse in die Ebene erfolgen muss, um eine ausreichend genaue Umleitung der Lichtstrahlen auf den Schnittpunkt der optischen Achse mit dem Linsensystem zu gewährleisten.

Ist jedoch der Abstand zwischen den Ebenen und der optischen Achse zu groß, um eine ausreichend genaue Umleitung zu gewährleisten, so ist es gemäß kennzeichnendem Merkmal des Anspruchs 6 zusätzlich zur geneigten Ausrichtung der Lichtquellen in den Ebenen auch noch erforderlich die Ebenen also solche in Richtung konvergierend zum erwähnten Schnittpunkt auszurichten.

Ansprüche 7 und 8 beschreiben bevorzugte Ausführungsvarianten, bei welcher mehrere Sendereinheiten und Empfängereinheiten samt Linsensysteme und Photozelle entlang der Detektierstrecke hintereinander oder aber auch nebeneinander (um die gesamte Breite der Detektierstrecke abzudecken) anzuordnen, wobei jede Sendereinheit aus mehreren, auch in mehreren parallelen Ebenen angeordneten, Lichtquellen bestehen kann.

Vorzugsweise sind, gemäß kennzeichnendem Merkmal des Anspruchs 9, die Lichtquellen direkt unterhalb des durchsichtigen Bodens der Materialrutsche angeordnet, wodurch die Gefahr des Übersehens von Fremdkörpern minimiert wird.

Anspruch 10 beschreibt den Einsatz einer neuen, erfindungsgemäßen Detektiervorrichtung in einer bekannten Sortiervorrichtung mit Ausblasdüsen.

### KURZE BESCHREIBUNG DER FIGUREN

Im Anschluss erfolgt nun eine detaillierte Beschreibung der Erfindung. Dabei zeigt
Fig.1 eine vereinfachte schematische Darstellung der erfindungsgemäßen Vorrichtung
Fig.2 eine vereinfachte schematische Darstellung der Detektiervorrichtung
Fig.3 eine Detailansicht der Anordnung der Lichtquellen einer Sendereinrichtung
Fig.4 schematische Ansicht einer Detektiervorrichtung

### WEGE ZUR AUSFÜHRUNG DER ERFINDUNG

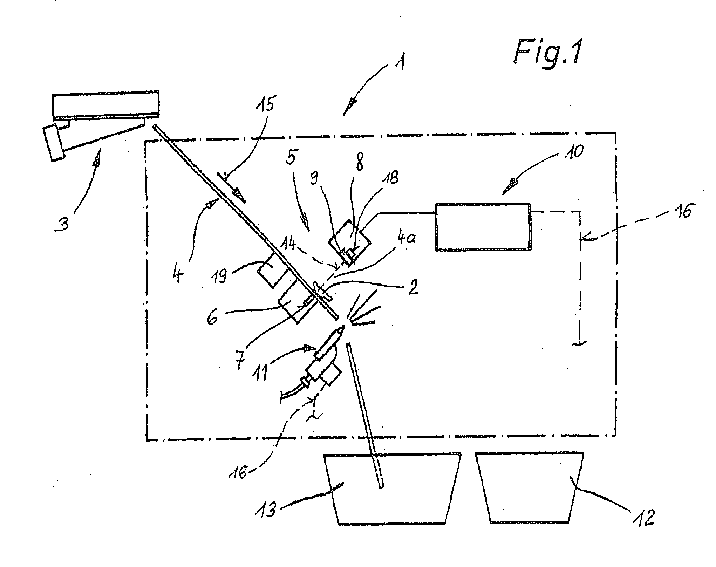

Fig.1 zeigt schematisch eine Sortiervorrichtung 1 zum Aussortieren von Fremdkörpern 2, wie beispielsweise Metallstücke, Keramik- oder Steingutstücke aus einem Bruchglasmaterialstrom. Bei dieser Vorrichtung 1 ist eine an die Aufgabestation 3 anschließende Materialrutsche 4 vorgesehen, in deren unterem Bereich eine Detektiervorrichtung 5 zur Erfassung von Fremdkörpern 2 im Bruchglasstrom angeordnet ist. Diese Detektiervorrichtung 5 besteht im wesentlichen aus mindestens einer Sendereinheit 6 mit nacheinander gepulsten Lichtquellen 7, vorzugsweise Diodenlichtquellen, sowie mindestens einer Empfängereinheit 8, die ein Linsensystem 9 und eine dahinter angeordnete Photozelle 18 umfasst, sowie einer Steuereinheit 10, welche mit am Ende der Materialrutsche 4 angeordneten Ausblasdüsen 11 verbunden ist und diese in Abhängigkeit der Signale der Sender- und Empfängereinheit steuert. Die Ausblasdüsen 11, die stromabwärts der Sender- und Empfängereinheit 6,8 am Ende der Materialrutsche 4 angeordnet sind, befinden sich gleichzeitig in einem Bereich, in welchem der Bruchglasmaterialstrom dem Verlauf einer Wurfparabel folgt. Bei einer Aktivierung der Ausblasdüsen 11 durch die Steuereinheit 10 werden die Fremdkörper 2 aus dem Bruchglasmaterialstrom heraus ausgelenkt, so dass diese in einen Abfallbehälter 12 fallen und somit von dem in einen anderen Behälter 13 fallenden Bruchglas getrennt werden.

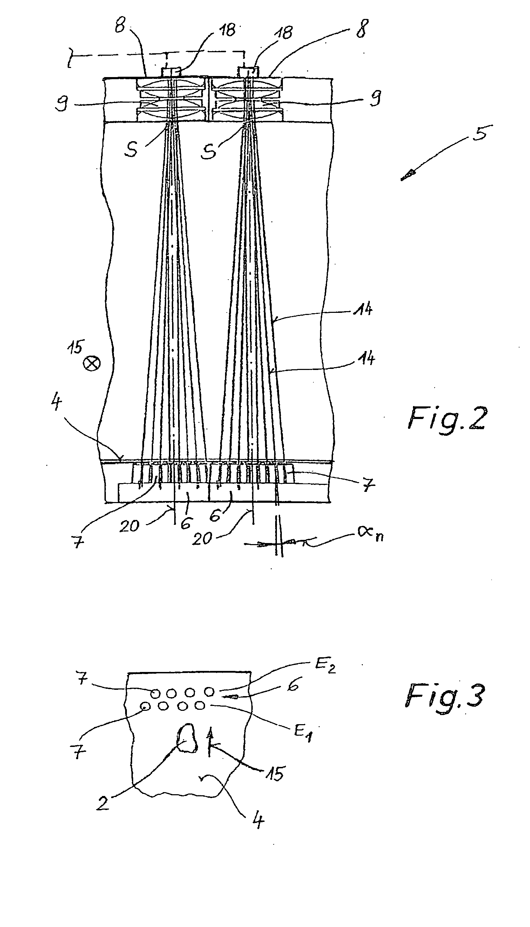

Die Detektiervorrichtung 5 selbst ist als sogenannte "Black Box" mit wenigen Handgriffen an die Sortiervorrichtung 1 montierbar und auch wieder entfernbar, so dass ein Austausch innerhalb weniger Minuten erfolgen kann. Wie bereits erwähnt umfasst die Sendereinheit 6 Lichtquellen 7, vorzugsweise geradlinige Lichtstrahlen 14 abstrahlende Diodenlichtquellen. Fig. 1 zeigt einen solchen Lichtstrahl 14 zwischen der Sendereinheit 6 und der Empfängereinheit 8 vereinfacht dargestellt. Der Lichtstrahl 14 wird von einem Linsensystem 9, das Bestandteil der Empfängereinheit 8 ist auf eine Photozelle 18 (siehe Fig.2) umgelenkt. Das dabei erzeugte Signal wird an die Steuereinheit 10 weitergeleitet.

Die Lichtquellen 7 sind unterhalb der Materialrutsche 4, die optisch durchsichtig ausgeführt ist, insbesondere unter der Detektierstrecke 4a angeordnet, so dass der Bruchglasmaterialstrom praktisch unmittelbar vor den Lichtquellen 7 vorbeiströmt. Erfindungsgemäß erfolgt die Ausrichtung so, dass die Lichtquellen 7 auf den Bereich des Schnittpunkts S der optischen Achse des Linsensystems 9 mit dem Linsensystem 9 ausgerichtet sind, unabhängig von ihrer Anordnung und Platzierung in Bezug auf die Empfängereinheit oder die Materialrutsche 4.

Fig.2 und Fig.3 zeigen bevorzugte Anordnungsmöglichkeiten der Lichtquellen 7.

In Fig.2 sind die Lichtquellen 7 einer Sendereinheit 6 in einer Ebene E₁ angeordnet, wobei sich die optische Achse 20 des Linsensystems 9 der jeweils zugeordneten Empfängereinheit 8 ebenfalls in dieser Ebene E₁ befindet. Die Materialflussrichtung zeigt in Fig.2 senkrecht auf das Blatt und ist mit Bezugszeichen 15 gekennzeichnet. Fig.2 zeigt eine Ausführungsvariante mit zwei Sendereinheiten 6 mit jeweils einer Anzahl an Lichtquellen 7 und zwei jeweils zugeordnete Empfängereinheiten 8 mit jeweils einem Linsensystem 9 und einer Photozelle 18. Selbstverständlich kann die Breite der Materialrutsche 4 auch durch eine Sendereinheit 6 und eine Empfängereinheit 8 abgedeckt werden oder aber durch mehr als zwei Sender- und Empfängereinheiten 6,8.

Erfindungsgemäß sind nun einige, nämlich jene nicht in der optischen Achse 20 liegenden Lichtquellen 7 um einen Winkel (α_{1,2,3,...n}) zur optischen Achse 20 geneigt ausgerichtet, so dass die emittierten Lichtstrahlen 14 im Schnittpunkt S der optischen Achse 20 des jeweiligen Linsensystems 9 einer Empfängereinheit 8 auftreffen. Durch diese erfindungsgemäße Ausrichtung ist gewährleistet, dass die schräg einfallenden Lichtstrahlen 14 parallel zur optischen Achse 20 abgelenkt werden und so eine optimale Abbildung auf der Photozelle 18 erzielt wird. Zu beachten ist, dass bei dieser bevorzugten Ausführungsform der Erfindung die Lichtstrahlen 14 der einzelnen Lichtquellen 7 nie gleichzeitig am Schnittpunkt S auftreffen und es deshalb auch zu keiner Interferenz kommen kann. Die Ansteuerung der Lichtquellen 7 erfolgt gepulst, so dass jeweils eine einzelne Lichtquelle einer Sendereinheit 6 gerade aktiv ist. Aus der Kenntnis der gerade aktiven Sendereinheit 6 und dem von der Photozelle 18 gelieferten Signal entscheidet die Steuereinheit 10 ob die dieser Sender/Empfängereinheit 6,8 zugeordnete Ausblasdüse 11 ausblasen soll oder nicht, um Fremdkörper 2 in den erwähnten Abfallbehälter 12 umzulenken. Die Entscheidung basiert auf der Tatsache, dass ein vorgegebener Spannungsschwellwert, der sich aus der auf der Photozelle 18 Lichtintensität ergibt, unterschritten wird oder nicht.

Fig.3 zeigt eine schematische Draufsicht auf eine mögliche weitere bevorzugte Anordnung von Lichtquellen 7 hinter der optisch durchsichtigen Materialrutsche 4. Wie sich leicht erkennen lässt, sind die Lichtquellen 7 in zwei Ebenen E₁, E₂ in Materialflussrichtung 15 hintereinander und seitlich versetzt ausgerichtet, wodurch eine noch genauere Auflösung Detektiervorrichtung 5 erreicht wird. Die Ebenen E₁, E₂ der Lichtquellen 7 können dabei entweder einer Sendereinheit 6 angehören und damit auch mit einer Empfängereinheit 8 zusammenarbeiten oder aber bildet jede Ebene E₁, E₂ eine Sendereinheit 6 und arbeitet daher auch mit jeweils einer zugeordneten Empfängereinheit 8 (also insgesamt zwei Empfängereinheiten 8) zusammen.

Die gewählte Ausführung hängt im wesentlichen davon ab, ob der Abstand zwischen den Ebenen E₁, E₂ ausreichend klein ist, um mit einem einzigen Linsensystem 9 zusammenzuarbeiten. In der Praxis ist bei einem Abstand von ca. 8-10 mm ein einziges Linsensystem 9 erforderlich. In diesem Fall können die Ebenen E₁, E₂ sogar parallel zueinander ausgerichtet sein. Die optische Achse 20 würde sich dann zwischen den beiden Ebenen E₁, E₂ befinden. Die Lichtstrahlen 14 würden dennoch so ausreichend im Bereich des Schnittpunktes S am Linsensystem 9 auftreffen, eine erfindungsgemäße Neigung um einen Winkel (α_{1,2,3,...n}) zur Projektion der optischen Achse 20 in die Ebenen E₁, E₂ vorausgesetzt, dass eine einwandfreie Ablenkung auf die Photozelle 18 möglich ist.

Sollte der Abstand zwischen den Ebenen E₁, E₂ größer sein, sodass eine einwandfreie Ablenkung der Lichtstrahlen 14 auf die Photozelle 18 nicht mehr möglich ist, muss entweder, wie bereits erwähnt, ein weiteres Linsensystem 9 und somit eine weitere Photozelle 18 zum Einsatz kommen, oder aber die Ebenen E₁, E₂ entsprechend in Richtung des Schnittpunktes S konvergierend ausgerichtet werden.

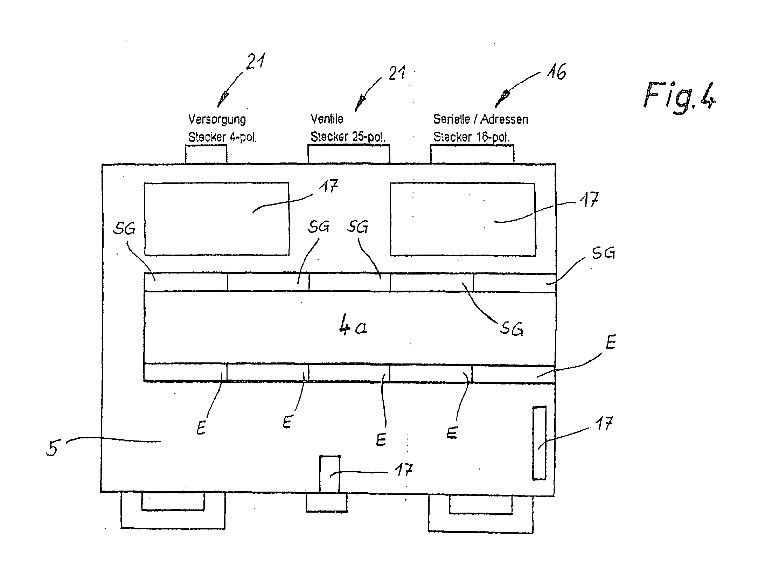

In einem bevorzugten Ausführungsbeispiel besteht eine Detektiervorrichtung 5 (siehe Fig.4) aus fünf parallel arbeitenden Sendereinheitsgruppen SG mit jeweils zweiunddreißig Diodenlichtquellen 7. Die Diodenlichtquellen 7 einer Sendereinheitsgruppe SG sind wiederum in vier Sendereinheiten 6 zu jeweils acht zusammengefasst. Jeder Sendereinheitsgruppe SG ist eine Empfängereinheitsgruppe E zugeordnet, die aus vier Empfängereinheiten 8 besteht. Erfindungsgemäß sind die von jeder Sendereinheit 6 emittierten Lichtstrahlen auf das Linsensystem 9 und in Folge auf die Photozelle 18 des der jeweiligen Sendereinheit 6 zugeordneten Empfängereinheit 8 ausgerichtet. Jede Empfängereinheitsgruppe E umfasst somit vier Empfängereinheiten 8 und somit vier Linsensysteme 9 und vier Photozellen 18. Sämtliche Empfängereinheiten 8 zusammen umfassen zwanzig Linsensysteme 9 und zwanzig Photozellen 18. Des weiteren zeigt die in Fig.4 ersichtliche Detektiervorrichtung 5 noch Anschlüsse 21 zur Stromversorgung und Verbindung mit den Ausblasventilen 11 sowie Datenleitungsanschlüsse 16 und verschiedene Bedienelemente 17.

Alle zweiunddreißig Diodenlichtquellen 7 jeder der parallel arbeitenden Sendereinheitsgruppen SG werden innerhalb der Zykluszeit von 1 ms nacheinander, gruppenweise aktiviert, also beispielsweise werden die jeweils ersten Diodenlichtquelle der Sendereinheiten 6 aller Sendereinheitsgruppen SG gleichzeitig aktiviert. Nach deren Abschaltung erfolgt die Aktivierung der jeweils zweiten Diodenlichtquellen 7 der Sendereinheiten 6 aller Sendereinheitsgruppen SG usw. Somit werden von den insgesamt zwanzig Photozellen 18 in einem Zyklus 160 Signale (entspricht 32 Zeilen) erfasst. Dies entspricht der einmaligen Erfassung der gesamten Sortierbreite der Materialrutsche 4 von 500 mm. Es sei an dieser Stelle angemerkt, dass die beschriebene Ausführungsvariante lediglich beispielhaft zu verstehen ist und dass die Anzahl der Sendereinheitsgruppen SG sowie der Diodenlichtquellen 7 und der Empfängereinheitsgruppen E, Empfängereinheiten 8 und somit der Linsensysteme 9 und Photozellen 18 willkürlich erfolgt ist und sich bei Praxistests als verlässlich herausgestellt hat. Selbstverständlich ist es dem Fachmann vollkommen klar, dass auch andere Enteilungen, die von den obigen Ausfürungsformen abweichen, zu einem guten Ergebnis führen können, ohne den Schutzbereich der Erfindung gemäß den beiliegenden Ansprüchen zu verlassen.

Die empfangenen analogen Signale werden in weiterer Folge von der Steuereinheit 10 abhängig von der von den Photozellen 18 empfangenen Lichtmenge in ein Spannungssignal umgewandelt. Diese Empfangssignale werden jeweils mit einer Referenzspannung verglichen und bei unterschreiten dieser Referenzspannung wird eine dieser Photozelle 18 zugeordnete Ausblasdüse 11 aktiviert.

Zur Erhöhung des Wirkungsgrades bei der Detektion und Ausscheidung der Fremdkörper 2 und im in weiterer Folge die Gutkornausbringung so gering wie möglich zu halten ist stromaufwärts zu den beschriebenen Sender- und Empfängereinheiten 6,8 ein zusätzlicher Nichteisendetektor 19 im Bereich der Materialrutsche 4 vorgesehen. Dieser Nichteisendetektor 19 ist ebenfalls mit der Steuereinheit 10 verbunden. Seine gelieferten Daten werden mit jenen der Sender- und Empfängereinheiten 6,8 verknüpft und tragen zu einer nochmaligen Verbesserung der digitalen Erstellung eines Abbildes des Bruchglasmaterialstromes bei.

Solange es sich um Detektiervorrichtungen bzw. Sortiervorrichtungen dieser Art handelt führt eine Änderung der Art und Weise der Signalverarbeitung bzw. des Entscheidungsfindungsprozesses wann eine Ausblasdüse 11 aktiviert wird, der Umgang mit Schwellwerten etc. nicht aus dem Schutzbereich der Erfindung heraus, da diese nur beispielhaft anhand des beschriebenen Ausführungsbeispieles zu verstehen sind jedoch keinesfalls einschränkend.

## Patentansprüche

1. Detektiervorrichtung (5) zum Erkennen von Gegenständen in einem Materialstrom, vorzugsweise aus Bruchglas, wobei mehrere geradlinig abstrahlende Lichtquellen (7), vorzugsweise Diodenlichtquellen, zu mindestens einer optischen Sendereinheit (6) zusammengefasst sind und mindestens eine ein Linsensystem (9) sowie eine Photozelle (18) umfassende der mindestens einen Sendereinheit (6) zugeordnete Empfängereinheit (8) vorgesehen sind, sowie eine dazwischen angeordnete, vom Materialstrom durchwanderte Detektierstrecke (4a), **dadurch gekennzeichnet, dass** jene nicht in der optischen Achse (20) des Linsensystems (9) liegenden Lichtquellen (7) um einem Winkel (α_{1,2,3,...n}) zur optischen Achse (20) geneigt ausgerichtet sind, so dass die von dem Lichtquellen (7) emittierten nichtstrahlen (14) vom Linsensystem (9) parallel zur optischen Asche (20) abgelenkt werden, um eine optimale Abbildung auf der Photozelle (18) zu erzielen.

2. Detektiervorrichtung (5) nach Anspruch 1, **dadurch gekennzeichnet, dass** die Lichtquellen (7) der Sendereinheit (6) in einer Ebene (E₁) gemeinsam mit der optischen Achse (20) des Linsensystems (9) der zugeordneten Empfängereinheit (8) angeordnet sind und jene in dieser Ebene (E₁) aber außerhalb der optischen Achse (20) liegenden Lichtquellen (7) in einem Winkel (α_{1,2,3,...n}) zur optischen Achse (20) des Linsensystems (9) der Empfängereinheit (8) ausgerichtet sind.

3. Detektiervorrichtung nach Anspruch 1 und 2, wobei die Detektierstrecke (4a) als optisch durchlässige Materialrutsche (4) ausgebildet ist, **dadurch gekennzeichnet, dass** die Ebene (E₁) senkrecht zum Boden der Materialrutsche (4) verläuft.

4. Detektiervorrichtung nach Anspruch 1, **dadurch gekennzeichnet, dass** die Lichtquellen (7) der Sendereinheit (6) entlang mehrerer parallel zueinander verlaufenden Ebenen (E₁, E₂) ausgerichtet sind.

5. Detektiervorrichtung nach Anspruch 4, **dadurch gekennzeichnet, dass** die parallel zueinander verlaufenden Ebenen (E₁,E₂) parallel zur optischen Achse (20) des Linsensystems (9) einer zugeordneten Empfängereinheit (8) verlaufen.

6. Detektiervorrichtung nach Anspruch 1, **dadurch gekennzeichnet, dass** die Lichtquellen (7) einer Sendereinheit (6) entlang zueinander im Schnittpunkt (S) der optischen Achse (20) mit dem Linsensystem (9) konvergierender Ebenen ausgerichtet sind.

7. Detektiervorrichtung nach einem der Ansprüche 1 bis 6, **dadurch gekennzeichnet, dass** mehrere optische Sendereinheiten (6) und Empfängereinheiten (8) in Materialflussrichtung hintereinander angeordnet sind.

8. Detektiervorrichtung nach einem der Ansprüche 1 bis 7, **dadurch gekennzeichnet, dass** mehrere optische Sendereinheiten (6) und Empfängereinheiten (8) über die gesamte Breite der Detektierstrecke (4a) nebeneinander angeordnet sind.

9. Detektiervorrichtung nach einem der Ansprüche 1 bis 8,
**dadurch gekennzeichnet, dass** die Lichtquellen (7) unterhalb des Bodens der Materialrutsche (4) angeordnet sind.

10. Sortiervorrichtung, zum Erkennen von Gegenständen in einem Materialstrom, vorzugsweise aus Bruchglas, mit einer Detektiervorrichtung (5), und einer damit verbundenen Steuereinheit (10), welche in Abhängigkeit des Detektiervorganges flussabwärts der Detektiervorrichtung (5) angeordnete Ausblasdüsen (11) steuert, wodurch auszusortierende Fremdkörper (2) aus dem Materialstrom auf einen definierten Ort, vorzugsweise einem Abfallbehälter (12) ausgelenkt werden, **dadurch gekennzeichnet, dass** die Detektiervorrichtung (5) jener in Anspruch 1 bis 8 beschriebenen entspricht.

## Claims

1. A detecting apparatus (5) for detecting objects in a material flow, preferably consisting of cullet, with several light sources (7) radiating light in a straight line, preferably diode light sources, being combined into at least one optical transmitter unit (6) and with at least one receiver unit (8) being provided which comprises a lens system (9) and a photocell (18) and is associated with the at least one transmitter unit (6), as well as an interposed detecting section (4a) which is flowed through by the material flow, **characterized in that** those light sources (7), which are not situated in the optical axis (20) of the lens system (9), are aligned in an inclined manner about an angle (a_{1,2,3,...n}) relative to the optical axis (20), so that the light beams (14) emitted by the light sources (7) are deflected parallel to the optical axis (20) by the lens system (9) in order to achieve an optimal projection on the photocell (18).

2. A detecting apparatus (5) according to claim 1,
**characterized in that** the light sources (7) of the transmitter unit (6) are arranged in a plane (E₁) jointly with the optical axis (20) of the lens system (9) of the associated receiver unit (8) and such light sources(7) which are situated in said plane (E₁) but outside of the optical axis (20) are aligned at an angle (α_{1,2,3,...n}) relative to the optical axis (20) of the lens system (9) of the receiver unit (8).

3. A detecting apparatus according to claim 1 and 2, with the detecting section (4a) being arranged as an optically transparent material chute (4), **characterized in that** the plane (E₁) extends perpendicular to the floor of the material chute (4).

4. A detecting apparatus according to claim 1, **characterized in that** the light sources (7) of the transmitter unit (6) are aligned along several planes (E₁, E₂) extending parallel with respect to each other.

5. A detecting apparatus according to claim 4, **characterized in that** the planes (E₁, E₂) extending parallel with respect to each other extend parallel to the optical axis (20) of the lens system (9) of an associated receiver unit (8).

6. A detecting apparatus according to claim 1, **characterized in that** the light sources (7) of a transmitter unit (6) are aligned along planes which converge with respect to each other in the point of intersection (S) of the optical axis (20) with the lens system (9).

7. A detecting apparatus according to one of the claims 1 to 6, **characterized in that** several optical transmitter units (6) and receiver units (8) are arranged behind one another in the direction of the flow of material.

8. A detecting apparatus according to one of the claims 1 to 7, **characterized in that** several optical transmitter units (6) and receiver units (8) are arranged next to one another over the entire width of the detecting section (4a).

9. A detecting apparatus according to one of the claims 1 to 8, **characterized in that** the light sources (7) are arranged beneath the floor of the material chute (4).

10. A sorting apparatus for recognizing objects in a material flow, preferably consisting of cullet, comprising a detecting apparatus (5) and a control unit (10) which is connected with the same and depending on the detection process controls blow-out nozzles (11) arranged downstream of the detecting apparatus (5), as a result of which foreign bodies (2) to be sorted out are deflected from the material flow to a defined location, preferably a waste container (12), **characterized in that** the detecting apparatus (5) corresponds to the one described in claim 1 to 8.

## Revendications

1. Dispositif de détection (5) pour la reconnaissance d'objets dans un flux de matériau, de préférence fait de verre cassé, dans lequel plusieurs sources lumineuses (7) émettant en ligne droite, de préférence des sources lumineuses à diodes, sont réunies en au moins une unité d'émission optique (6) et au moins une unité de réception (8) comprenant un système de lentilles (9) et une cellule photoélectrique (18) et associée à l'au moins une unité d'émission (6), ainsi qu'un trajet de détection (4a) disposé entre celles-ci et parcouru par le flux de matériau, **caractérisé en ce que** les sources lumineuses (7) qui ne se trouvent pas dans l'axe optique (20) du système de lentilles (9) sont inclinées par rapport à l'axe optique (20) selon un certain angle (α_{1,2,3,...n}), de sorte que les faisceaux lumineux (14) émis par les sources lumineuses (7) sont déviés par le système de lentilles (9) parallèlement à l'axe optique (20) afin d'obtenir une image optimale sur la cellule photoélectrique (18).

2. Dispositif de détection (5) selon la revendication 1, **caractérisé en ce que** les sources lumineuses (7) de l'unité d'émission (6) sont disposées dans le même plan (E₁) que l'axe optique (20) du système de lentilles (9) de l'unité de réception (8) correspondante et les sources lumineuses (7) situées dans ce plan (E₁) mais en dehors de l'axe optique (20) sont orientées selon un angle (α_{1,2,3,...n}) par rapport à l'axe optique (20) du système de lentilles (9) de l'unité de réception (8).

3. Dispositif de détection selon les revendications 1 et 2, dans lequel le trajet de détection (4a) est conformé comme une glissière à matériau (4) transparente du point de vue optique, **caractérisé en ce que** le plan (E₁) est perpendiculaire au fond de la glissière à matériau (4).

4. Dispositif de détection selon la revendication 1, **caractérisé en ce que** les sources lumineuses (7) de l'unité d'émission (6) sont orientées le long de plusieurs plans (E₁, E₂) parallèles les uns aux autres.

5. Dispositif de détection selon la revendication 4, **caractérisé en ce que** les plans (E₁, E₂) parallèles les uns aux autres sont parallèles à l'axe optique (20) du système de lentilles (9) d'une unité de réception (8) correspondante.

6. Dispositif de détection selon la revendication 1, **caractérisé en ce que** les sources lumineuses (7) d'une unité d'émission (6) sont orientées le long de plans convergeant les uns vers les autres au point d'intersection (S) de l'axe optique (20) et du système de lentilles (9).

7. Dispositif de détection selon l'une des revendications 1 à 6, **caractérisé en ce que** plusieurs unités d'émission optiques (6) et unités de réception (8) sont disposées à la suite les unes des autres dans le sens de circulation du matériau.

8. Dispositif de détection selon l'une des revendications 1 à 7, **caractérisé en ce que** plusieurs unités d'émission optiques (6) et unités de réception (8) sont disposées les unes à côté des autres sur toute la largeur du trajet de détection (4a).

9. Dispositif de détection selon l'une des revendications 1 à 8, **caractérisé en ce que** les sources lumineuses (7) sont disposées en dessous du fond de la glissière à matériau (4).

10. Dispositif de tri pour la reconnaissance d'objets dans un flux de matériau, de préférence fait de verre cassé, avec un dispositif de détection (5) et une unité de commande (10) reliée à celui-ci, qui commande en fonction du processus de détection des buses de soufflage (11) disposées en aval du dispositif de détection (5), de sorte que les corps étranger (2) à exclure du flux de matériau sont déviés vers un endroit défini, de préférence un conteneur à déchets (12), **caractérisé en ce que** le dispositif de détection (5) correspond à celui défini dans les revendications 1 à 8.
